# EUROPEAN PATENT APPLICATION

(11) **EP 2 287 712 A2**
(43) Date of publication of application: **23.02.2011**
(21) Application number: 10169090.7
(22) Date of filing: 09.07.2010
(51) Int. Cl.: G06F 3/042

(54) **Display system and method of controlling the same**

(30) Priority: 23.07.2009 KR 20090067447
(71) Applicant: Samsung Electronics Co., Ltd, Suwon-si, Gyeonggi-do (KR)
(72) Inventor: Kang, Jung-min, Seoul (KR); Cho, Seong-il, Seoul (KR); Lee, Dong-ho, Seoul (KR); Seo, Young-kwang, Seoul (KR); Jeong, Ki-jun, Seoul (KR)
(74) Representative: Hewett, Jonathan Michael Richard

(57) **Abstract**

Disclosed are a display system and a method of controlling the same, the display system including: an input device which includes a movable light interceptor and selectively intercepts light; a display panel which is touched with the input device; an emitter which emits light; a receiver which receives light; and a display device including a controller which controls the emitter and the receiver to emit and receive light, respectively, and recognizes the input device if light emitted from the emitter is intercepted by the light interceptor. With this, a contact time and a recognition time of an object can be separated.

## Description

The present invention relates to a display system and a method of controlling the same, and more particularly, to a display system and a method of controlling the same, which can separate a contact time and a recognition time of an object.

There are various technologies for recognizing and tracking an object that comes into contact with a touch screen. The existing technologies for recognizing and tracking the object were provided to recognize the object at a time when the object comes into contact with the touch screen. Accordingly, a user has to keep the object apart from the touch screen if he/she does not want the object to be recognized. In result, even if a user actually doesn't want to recognize the object by the touch screen, the touch screen can recognize the object at any point of time when the object comes into contact with the touch screen.

Accordingly, an aspect of the present invention is to provide a display system and a method of controlling the same, which can recognize an object by separating a contact time and a recognition time so that a touch screen can recognize the object at a point of time when a user actually wants to use the object.

The foregoing and/or other aspects of the present invention can be achieved by providing a display system comprising: an input device which may include a movable light interceptor and selectively intercepts light; a display panel which is touched with the input device; an emitter which emits light; a receiver which receives light; and a display device comprising a controller which controls the emitter and the receiver to emit and receive light and recognizes the input device if light emitted from the emitter is intercepted by the light interceptor.

The input device may include a light transmitter capable of transmitting light, and the light interceptor be disposed perpendicularly to the light transmitter and movable up and down.

The controller may recognize the input device by detecting a light interception position if light emitted from the emitter is intercepted by the light interceptor moved down.

The controller may detect the light interception position on the basis of a projected image of the display panel.

The controller may control the emitter to emit light at a lateral or an underside of the display panel.

The controller may recognize a first certain pattern attached to a bottom part of the light interceptor and displayed on the projected image.

The controller may recognize a second certain pattern comprising a plurality of the light interceptors.

The controller may detect coordinates corresponding to the light interception position by controlling the emitter to emit light at a lateral of the display panel and the receiver to receive the light emitted from the emitter.

The emitter may emit infrared light.

Another aspect of the present invention can be achieved by providing a method of controlling a display system, comprising touching a display device with an input device which may include a movable light interceptor and selectively intercepts light; emitting light from the display device to the input device; and recognizing the input device if light emitted from the display device is intercepted by the light interceptor.

The input device may include a light transmitter capable of transmitting light, and the light interceptor may be disposed perpendicularly to the light transmitter and movable up and down.

The method may further include detecting a light interception position to recognize the input device if light emitted from the display device is intercepted by the light interceptor moved down.

The method may further include using a projected image of a display panel to detect the light interception position.

The method may further include emitting light at a lateral or an underside of the display panel.

The method may further include recognizing a first certain pattern attached to a bottom part of the light interceptor and displayed on the projected image.

The method may further include recognizing a second certain pattern comprising a plurality of the light interceptors.

The method may further include detecting coordinates corresponding to the light interception position by emitting light at a lateral of the display panel and receiving the emitted light at an opposite side.

The display device may emit infrared light.

The above and/or other aspects of the present invention will become apparent and more readily appreciated from the following description of the exemplary embodiments, taken in conjunction with the accompanying drawings, in which:
FIG. 1 is a block diagram of a display system according to an exemplary embodiment of the present invention;
FIGs. 2A and 2B show an input device according to an exemplary embodiment of the present invention;
FIGs. 3A to 3C show a method of detecting a light intercepting position according to an exemplary embodiment of the present invention;
FIGs. 4A to 4C show a method of detecting a light interception position according to another exemplary embodiment of the present invention;
FIGs. 5A to 5C show a method of detecting a light intercepting position according to still another exemplary embodiment of the present invention;
FIG. 6 shows a method of recognizing an input device according to an exemplary embodiment of the present invention;
FIGs. 7A to 7C show a method of recognizing an input device according to another exemplary embodiment of the present invention; and
FIGs. 8A to 8F show configurations of input devices according to various exemplary embodiments of the present invention; and
FIG. 9 is a flowchart of controlling a display system according to an exemplary embodiment of the present invention.

Below, exemplary embodiments of the present invention will be described in detail with reference to accompanying drawings so as to be easily realized by a person having ordinary knowledge in the art. The present invention may be embodied in various forms without being limited to the exemplary embodiments set forth herein. Descriptions of well-known parts are omitted for clarity, and like reference numerals refer to like elements throughout.

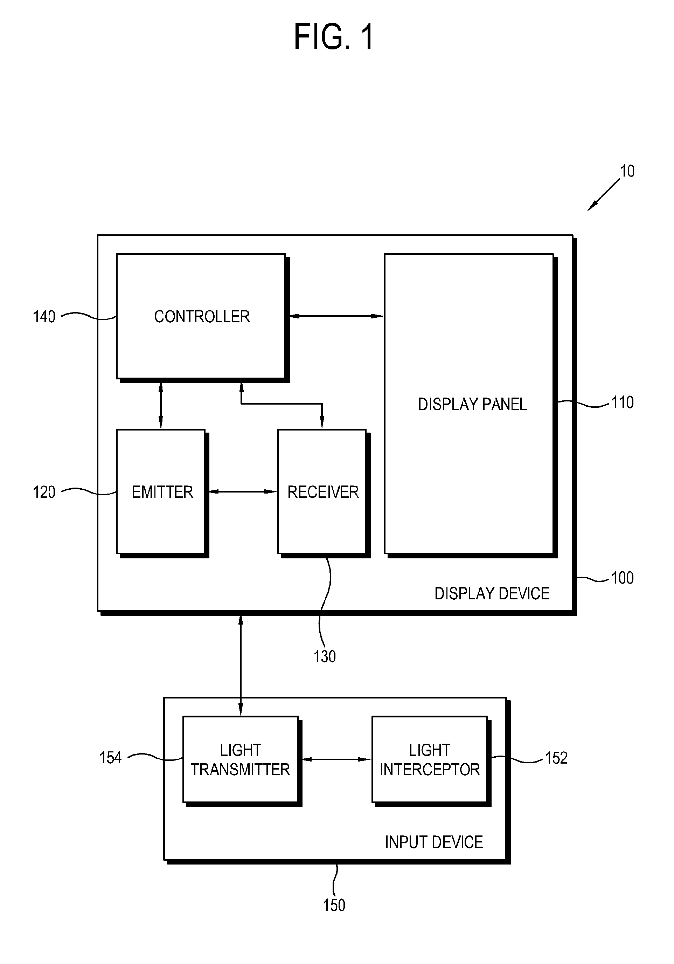

FIG. 1 is a block diagram of a display system according to an exemplary embodiment of the present invention.

A display system 10 in this exemplary embodiment includes a display device 100 and an input device 150.

The display device 100 may include a digital television, a monitor, a desktop computer, a notebook computer, a mobile terminal, a personal digital assistant (PDA), etc. Further, the display device 100 includes a touch screen, and any electronic device can be used as the display device 100 as long as it can recognize an object coming into contact with the touch screen.

According to an exemplary embodiment of the present invention, the display device 100 may be achieved by a large format display (LFD), a digital signage, a digital information display (DID), etc.

The display device 100 may include a display panel 110, an emitter 120, a receiver 130, and a controller 140.

The display panel 110 may be touched with the input device 150. In this case, the display panel 110 may recognize the touching input device 150. For this, the display panel 110 may be achieved in the form of a touch screen.

According to an exemplary embodiment, the display panel 110 may be of a table-top type disposed in parallel with the ground and displaying an image. In this case, a user may put an object on the display panel 110.

According to another exemplary embodiment, the display panel 110 may be disposed perpendicularly to the ground according to a general display usage or may be inclined at a predetermined angle to the ground. In this case, a user may attach an object to the display panel 110.

The emitter 120 may emit light. In this exemplary embodiment, the emitter 120 may emit infrared light. The emitter 120 may include a light source such as an infrared (IR) light emitting diode (LED).

The receiver may receive light.

The controller 140 controls the emitter 120 to emit light and the receiver 130 to receive the light.

The controller 140 may recognize the input device 150 when the light emitted from the emitter 120 is intercepted by a light interceptor 152 of the input device 150. In this exemplary embodiment, if the light emitted from the emitter 120 is intercepted by the light interceptor 152 when the light interceptor 152 moves towards the display panel 110, the controller 140 may detect a position where the light is intercepted and recognize the input device 150.

According to an exemplary embodiment, the controller 140 may detect the position of intercepting the light on the basis of a projected image of the display panel 110. In this case, the controller 140 may control the emitter 120 to emit light at a lateral or an underside of the display panel 110. In the case of emitting the light at the lateral of the display panel 110, the object is recognized by a frustrated total internal reflection (FTIR) method. On the other hand, in the case of emitting the light at the underside of the display panel 110, the object is recognized by a diffused illumination (DI) method. Meanwhile, the display device 100 may further include a camera, a projector, or the like sensor for sensing the projected image.

According to another exemplary embodiment, the controller 140 may recognize a first certain pattern attached to a bottom part of the light interceptor 152 displayed in a projected image.

According to still another exemplary embodiment, the controller 140 may recognize a second certain pattern including a plurality of light interceptors 152.

According to yet another exemplary embodiment, the controller 140 controls the emitter 120 to emit the light at the lateral of the display panel 110, and the receiver 130 to receive the light emitted from the emitter 120, thereby detecting coordinates corresponding to the position of intercepting the light. In this exemplary embodiment, the object is recognized by a side looker method. The side looker method recognizes a touch by sensing light without using the camera. Specifically, the controller 140 may control the emitter 120 to emit the light in parallel with a widthwise (X-axis) direction and a lengthwise (Y-axis) direction of the display panel 110, respectively. The light emitted from the emitter 120 travels straight. If the light interceptor 152 is positioned on a travelling path of the light, the light is intercepted by or reflected from the light interceptor 152. In this case, the light cannot approach the opposite side. Thus, the controller 140 recognizes coordinates on the X and Y axes where light does not approach, and thus detects the coordinates corresponding to the position of intercepting the light.

The input device 150 may include any object that can be put on the display device 100. According to an exemplary embodiment, the input device 150 may be configured to have a three-dimensional shape, and thus used as a tangible user interface.

The input device 150 may give a control command to the display device 100. Here, the control command may be input to the display device 100 in the form of all operations applied by a user to the input device 150. For example, there are a touching operation, a tracking operation, a pushing operation, a pulling operation, a dragging operation, etc.

The input device 150 may include a light transmitter 154 and the light interceptor 152

The light transmitter 154 may transmit light. According to an exemplary embodiment, the light transmitter 154 is disposed in parallel with the ground. In this case, the light transmitter 154 is made of a medium capable of transmitting light. For example, the light transmitter 154 is made of an acrylic plate or tempered glass.

The light interceptor 152 is movable to selectively intercept light. According to an exemplary embodiment, the light interceptor 152 is disposed perpendicularly to the light transmitter 154 and movable up and down. In this case, the light interceptor 152 moves up and down to penetrate the light transmitter 154 or press the light transmitter 154.

Meanwhile, the input device 150 may include only the light interceptor 152 without the light transmitter 154.

According to this exemplary embodiment of the present invention, the display system recognizes the input device according to recognition of the light interceptor 152, as opposed to a contact time of the input device 150 with the display device 100.

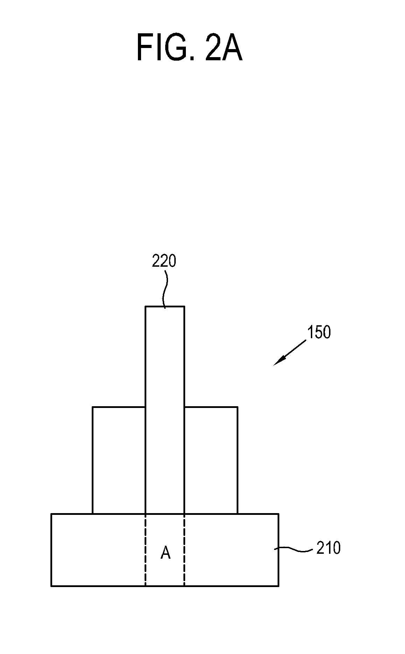

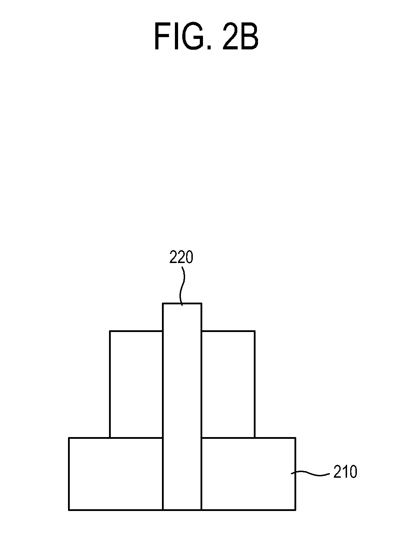

FIGs. 2A and 2B show an input device according to an exemplary embodiment of the present invention.

Referring to FIG. 2A, a light transmitter 210 capable of transmitting light is arranged in a bottom part of the input device 150, and a light interceptor 220 is movable to the bottom part of the input device 150.

On the bottom part of each input device 150, the light transmitter 210 may be arranged. The light transmitter 210 may be made of a medium capable of transmitting infrared light as it is. In this case, the light transmitter 210 placed in the bottom part of the input device 150 can transmit the light emitted from the display device 100. Meanwhile, the light transmitter 210 is configured to allow the light interceptor 220 to penetrate the light transmitter 210. Referring to FIG. 2A, the light interceptor 220 can penetrate an "A" part of the light transmitter 210.

The light interceptor 220 may selectively intercept the light passing through the light transmitter 210. The light interceptor 220 is made of a medium incapable of transmitting light. Also, the light interceptor 220 is movable to penetrate or press the light transmitter 210. With this configuration, the light interceptor 220 may be selected to intercept or not to intercept the light passed through the light transmitter 210. Referring to FIG. 2B, the light interceptor 220 moves down and penetrates the light transmitter 210. In this case, light passing through the light transmitter 210 is intercepted at a position where the light interceptor 220 penetrates the light transmitter 210.

According to an exemplary embodiment, there may be a plurality of light interceptors 220. In this case, the light interceptors 220 can intercepts a plurality of light.

Referring to FIG. 2A, the display device 100 does not recognize the input device 150 even though the input device 150 is put on the touch screen, i.e., the display panel 110. On the other hand, referring to FIG. 2B, the display device 100 recognizes the input device 150 put on the touch screen.

Thus, if the input device is used with the touch screen, a user may make the display device recognize the input device at a point of time when he/she actually uses the input device. In other words, the display device cannot recognize the input device put on the touch screen until a user begins to use the input device. Thus, a user may accomplish a touch input with a hand or other pointing devices while the input device is put on the display device. Further, a user may use the input device's own function instead of inputting a control command while the input device is put on the display device.

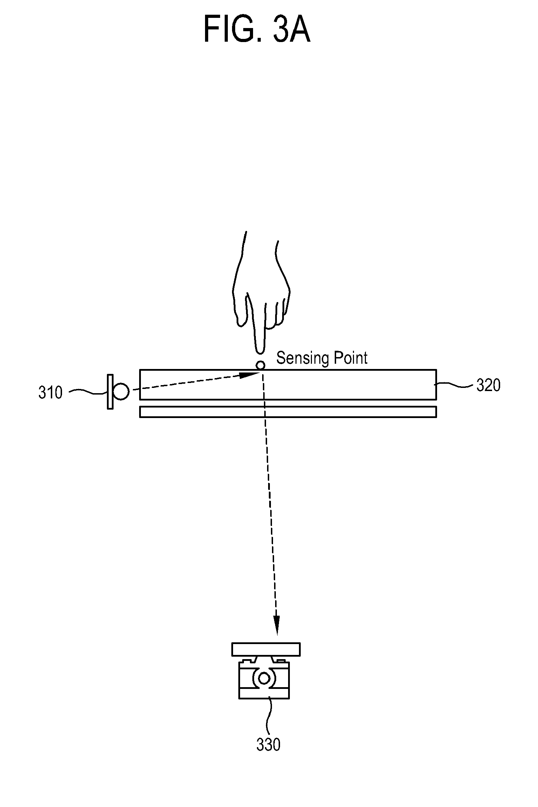

FIGs. 3A to 3C show a method of detecting a light intercepting position according to an exemplary embodiment of the present invention.

According to an exemplary embodiment, the display device may emit light at a lateral of the display panel, and detect a light interception position on the basis of a projected image of the display panel. That is, the light interception position can be detected by a frustrated total internal reflection (FTIR) method.

As shown in FIG. 3A, when a light source 310 placed at the lateral of the display panel 320 emits light, the light travels through the display panel 320. If a certain position (i.e., sensing position) is touched with a finger on the display panel 320, the light traveling through the display panel 320 is diffused and reflected by the finger. In this case, a camera 330 placed under the display panel 320 senses the diffused and reflected light, thereby detecting the sensing position.

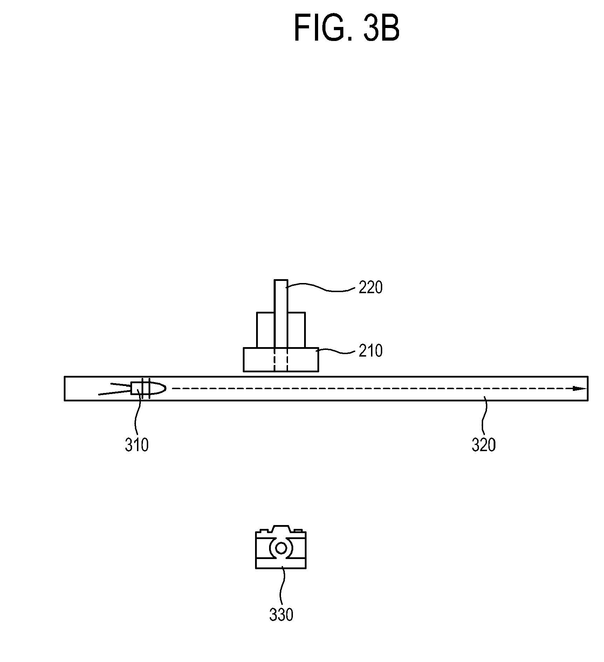

Referring to FIG. 3B, the light interceptor 220 does not penetrate the light transmitter 210, so that the light emitted from the light source 310 can fully pass through the light transmitter 210. Thus, the display device 100 does not recognize the input device 150 even though the input device 150 is put on the display panel 320.

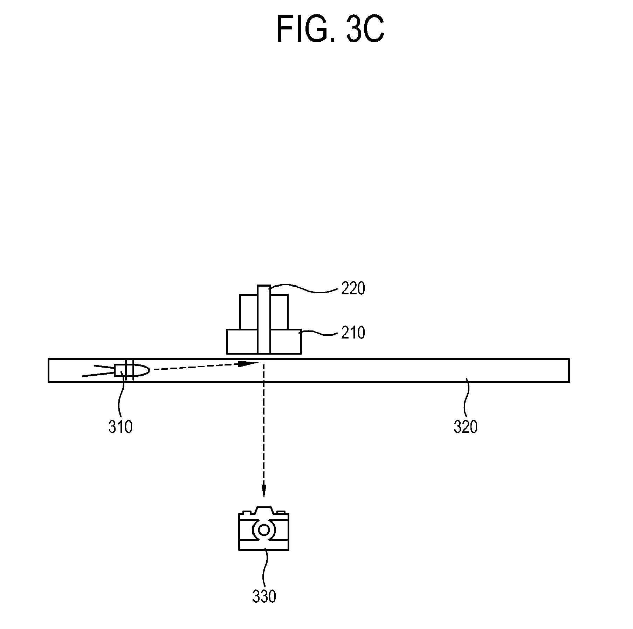

Referring to FIG. 3C, the light interceptor 220 moves down and penetrates the light transmitter 210. In this case, the light passing through the light transmitter 210 is intercepted by an irregularly reflected from the light interceptor 220 penetrating the light transmitter 210. Thus, the display device 100 senses the diffused and reflected light through the camera 330, thereby recognizing the input device 150 put on the display panel 320 and detecting the position of the input device 150. In this case, the camera 330 may be an IR pass filter camera.

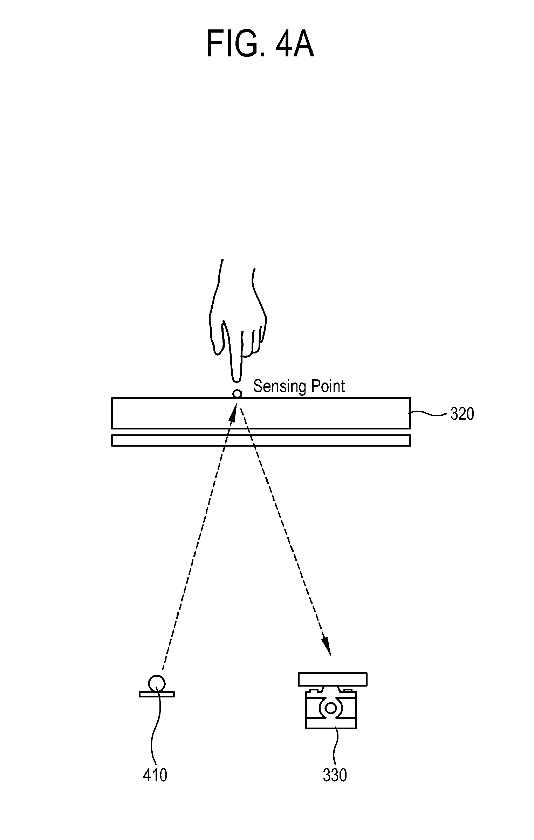

FIGs. 4A to 4C show a method of detecting a light interception position according to another exemplary embodiment of the present invention.

According to this exemplary embodiment, the display device may emit light under the display panel, and detect a light interception position on the basis of a projected image of the display panel. That is, the light interception position can be detected by a diffused illumination (DI) method.

As shown in FIG. 4A, when a light source 410 placed under the display panel 320 emits light, the light travels through the display panel 320. If a certain position (i.e., sensing position) is touched with a finger on the display panel 320, the light travelling through the display panel 320 is diffused and reflected by the finger. In this case, a camera 330 placed under the display panel 320 senses the diffused and reflected light, thereby detecting the sensing position.

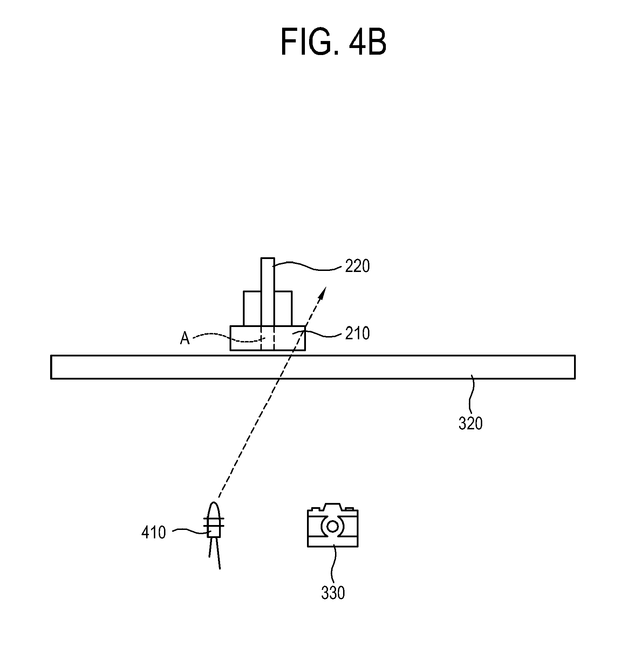

Referring to FIG. 4B, the light interceptor 220 does not penetrate the light transmitter 210, so that the light emitted from the light source 410 can fully pass through the light transmitter 210. Thus, the display device 100 does not recognize the input device 150 even though the input device 150 is put on the display panel 320.

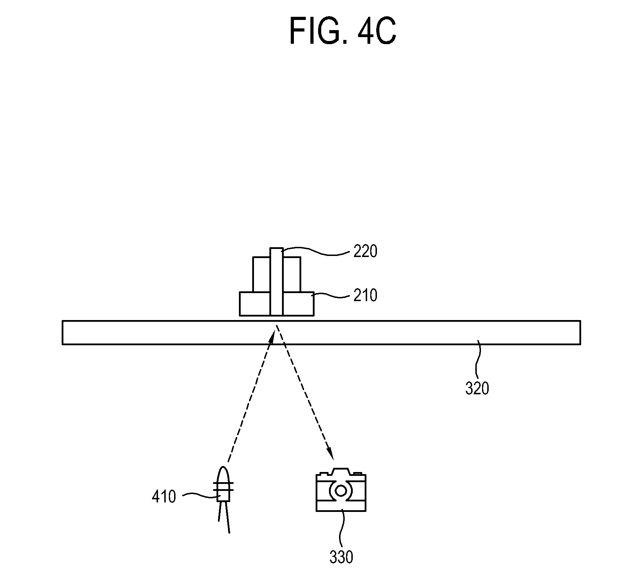

Referring to FIG. 4C, the light interceptor 220 moves down and penetrates the light transmitter 210. In this case, the light passing through the light transmitter 210 is intercepted by and irregularly reflected from the light interceptor 220 penetrating the light transmitter 210. Thus, the display device 100 senses the diffused and reflected light through the camera 330, thereby recognizing the input device 150 put on the display panel 320 and detecting the position of the input device 150.

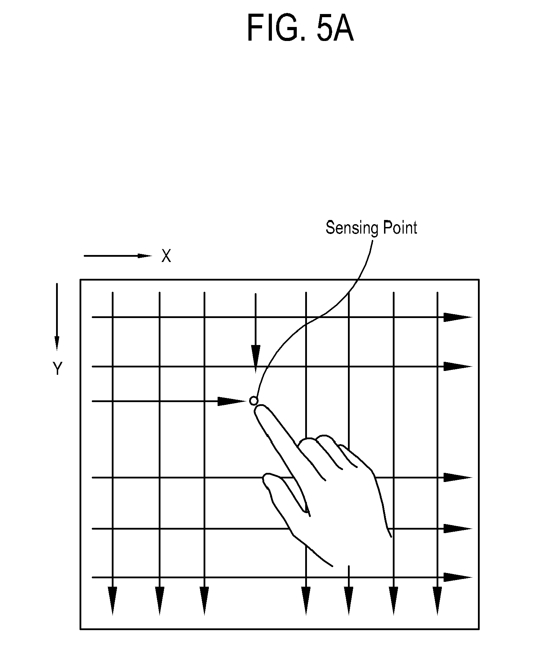

FIGs. 5A to 5C show a method of detecting a light intercepting position according to still another exemplary embodiment of the present invention.

According to this exemplary embodiment, the display device may emit light at a lateral of the display panel, and detect a light interception position, thereby detecting coordinates corresponding to the light interception position. That is, the coordinates corresponding to the light interception position can be detected by a side looker method.

Specifically, the display device 100 may emit light in parallel with a widthwise direction (X axis) and a lengthwise direction (Y axis), respectively. The emitted light travels in a straight line. If the light interceptor 152 is positioned on a travelling path of the light, the light travelling in a straight line is intercepted by or reflected from the light interceptor 152. In this case, the light cannot approach the opposite side. Thus, the display device 100 recognizes coordinates on the X and Y axes where light does not approach, and thus detects the coordinates corresponding to the light interception position.

Referring to FIG. 5A, all positions on the touch screen may be identified by corresponding coordinates. If light is emitted from a left side of the touch screen (i.e., along the X axis), the emitted light travels in a straight line and approaches an opposite right side of the touch screen. Likewise, if light is emitted from an upside of the touch screen (i.e., along the Y axis), the emitted light travels in a straight line and approaches an opposite downside of the touch screen. In this state, if a certain position (i.e., sensing position) is touched with a finger on the touch screen, the emitted light is intercepted at the certain position and does not approach the opposite sides. Thus, it is possible to detect the coordinates corresponding to the light interception position.

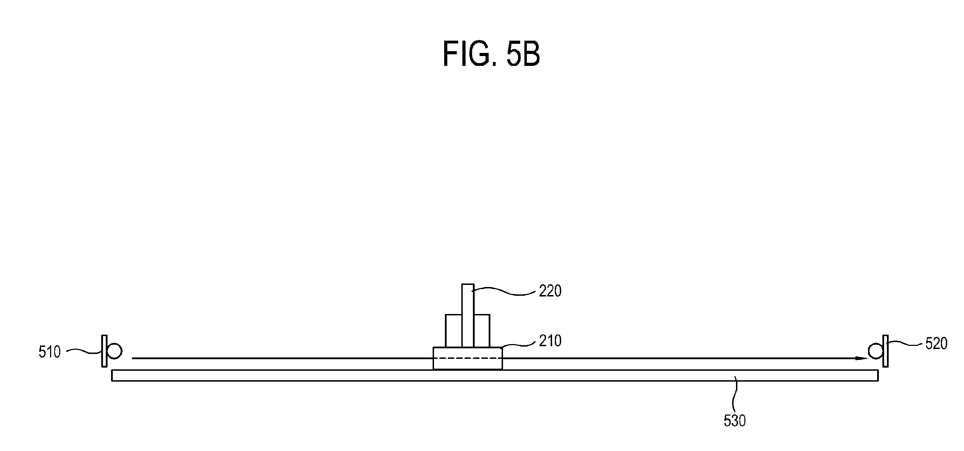

Referring to FIG. 5B, the light interceptor 220 does not penetrate the light transmitter 210, so that the light emitted from an emitter 510 can fully pass through the light transmitter 210 and approach a receiver 520 placed at the opposite side. Thus, the display device 100 does not recognize the input device 150 even though the input device 150 is put on the touch screen 320.

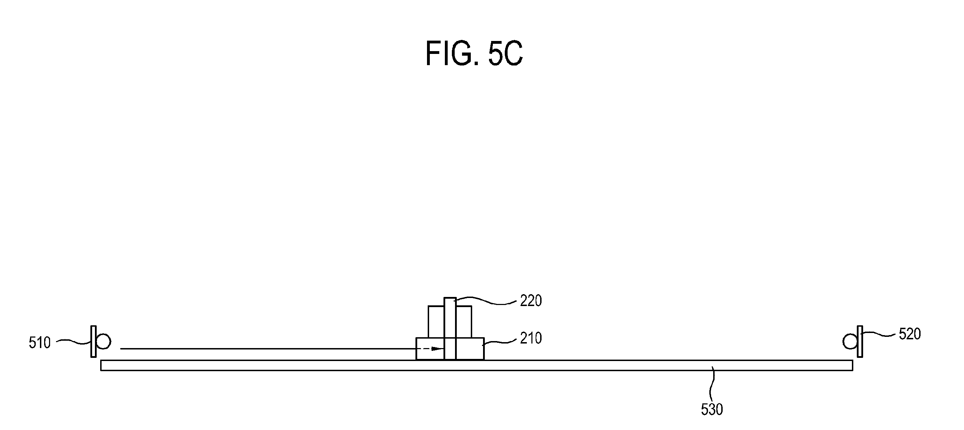

Referring to FIG. 5C, the light interceptor 220 moves down and penetrates the light transmitter 210. In this case, the light passing through the light transmitter 210 is intercepted by the light interceptor 220 penetrating the light transmitter 210. Thus, the light emitted to a position where the light interceptor 220 penetrates the light transmitter 210 cannot approach the receiver 520 placed at the opposite side, so that the display device 100 can recognize the input device put on the touch screen 530.

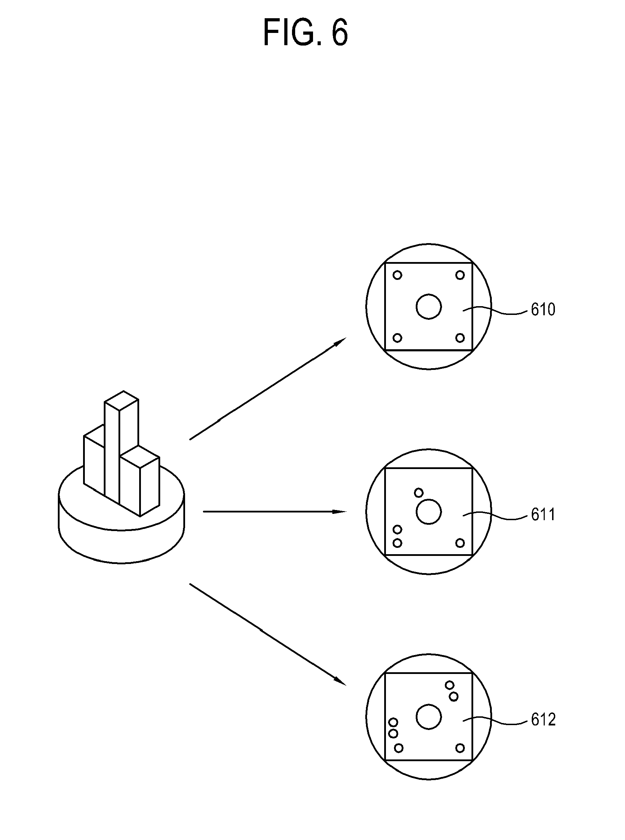

FIG. 6 shows a method of recognizing an input device according to an exemplary embodiment of the present invention.

In a method of recognizing an input device according to an exemplary embodiment, the display device 100 can recognize a first certain pattern attached to a bottom part of the input device 150 displayed as a projected image. Specifically, a user may attach a mark having the first certain pattern to a bottom part of the light interceptor 152. To make the display device 100 recognize the input device 150 put on the touch screen, a user moves the light interceptor 152 down. If the light interceptor 152 moves down and is displayed as a projected image on the display device 100, the display device 100 recognizes the first certain pattern.

FIG. 6 shows various exemplary patterns which may be attached to the bottom part of the light interceptor 152 (patterns 610, 611 and 612).

Thus, the kinds and the number of recognizable objects may increase through various patterns, so that the object can be flexibly designed.

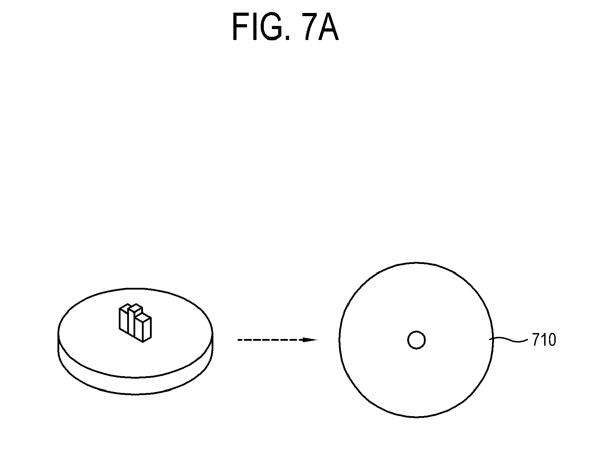

FIGs. 7A to 7C show a method of recognizing an input device according to another exemplary embodiment of the present invention.

In a method of recognizing an input device according to this exemplary embodiment, a plurality of light interceptors may be arranged in the input device so as to achieve various patterns which the display device may recognize. That is, the display device 100 may recognize a second certain pattern having the plurality of light interceptors 152. Specifically, to make the display device 100 recognize the input device 150 put on the touch screen, a user may move the plurality of light interceptors 152 down. If the plurality of light interceptors 152 moves down and is displayed as a projected image on the touch screen 100, the display device 100 recognizes the second certain pattern.

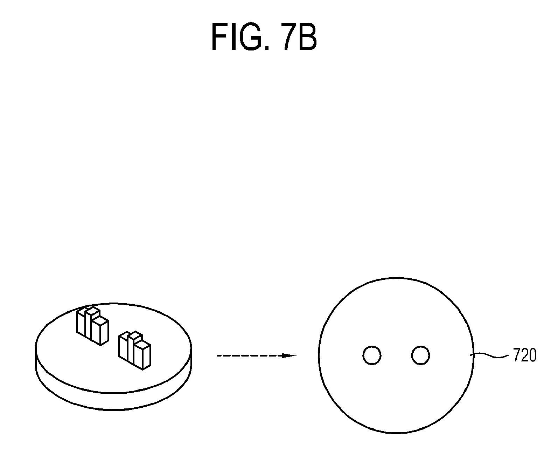

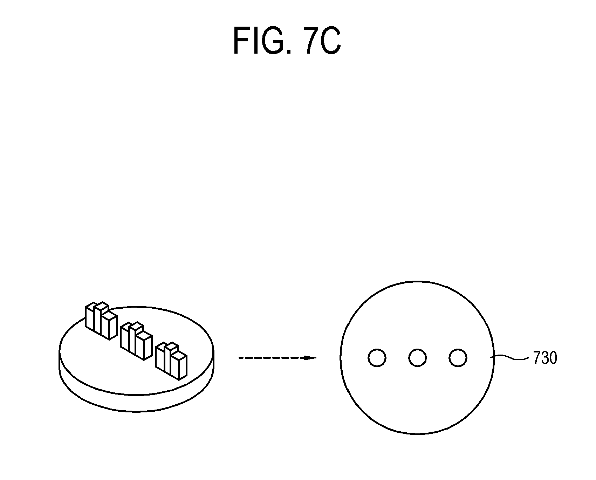

FIG. 7A shows that the second certain pattern 710 is achieved by one light interceptor 152, FIG. 7B shows that the second certain pattern 710 is achieved by two light interceptors 152, and FIG. 7C shows that the second certain pattern 710 is achieved by three light interceptors 152. Besides, the second certain pattern may be set up variously depending on the number and the position of the light interceptors 152.

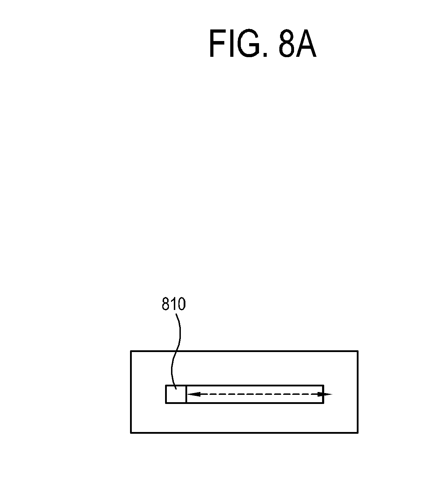

FIGs. 8A to 8F show configurations of input devices according to various exemplary embodiments of the present invention.

The input device 150 may be achieved by a tangible user interface having a certain shape. Specifically, the input device 150 may be achieved by various objects such as a dial, a scroller, a slider, a keypad, a lens, a push knob, etc.

FIG. 8A shows that the input device is provided in the form of a scroll bar. The scroll bar 810 is movable on a plane or a vertical surface.

In the state that the input device 150 is put on the touch screen, if a user presses the scroll bar 810, the display device 100 recognizes the input device 150. Specifically, the display device 100 may display a menu or a graphic user interface corresponding to the recognized input device 150 on the touch screen. In this case, a user can select a desired menu by moving the pressed scroll bar 810 up and down or left and right to a certain menu. Further, a user may move the scroll bar 810 to enlarge or move a displayed image, or to change the displayed image into another image. Also, the display device 100 may display data stored in the recognized input device 150.

On the other hand, even though the input device 150 is put on the touch screen, the display device 100 cannot recognize the input device 150 unless a user presses the scroll bar 810. Thus, a user may employ the input device 150 not for the input device but for the scroll bar 810's own function. In this case, even though a user moves the scroll bar 810 left and right or up and down, the display device 100 does not recognize this. The function of the scroll bar 810 may be variously designed.

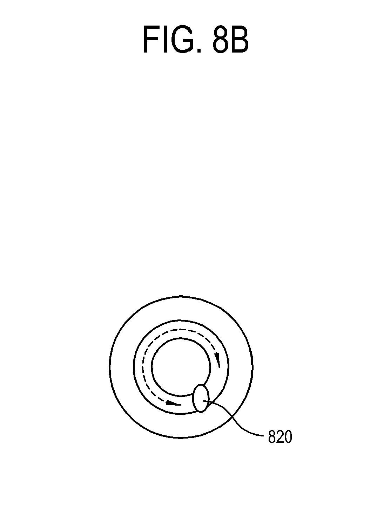

FIG. 8B shows that the input device is provided in the form of a dial. The dial 820 is rotatable along a circular orbit spaced at a predetermined distance from the center.

A user presses the dial 820 of the input device 150 put on the touch screen, and turns the pressed dial 820 clockwise or counterclockwise to select a desired menu. Also, a user may turn the dial 820 to increase or decrease an audio volume or to enlarge or reduce a displayed image. Further, the display device 100 may display data stored in the recognized input device 150.

On the other hand, if a user does not press the dial 820 of the input device 150, he/she may employ the input device 150 not for the input device but for the dial 820's own function. In this case, even though a user turns the dial 820 clockwise or counterclockwise, the display device 100 does not recognize this.

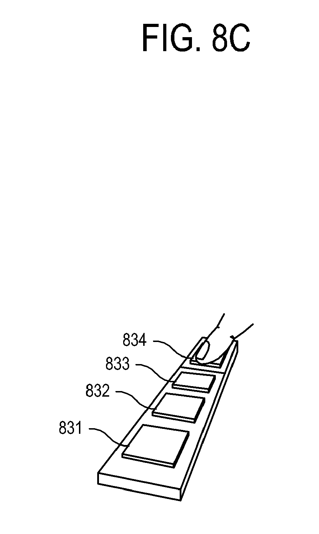

FIG. 8C shows that the input device is provided in the form of a keyboard. The keyboard includes a plurality of input buttons 831, 832, 833 and 834, and each input button has its own function.

In the state that the input device 150 is put on the touch screen, if a user presses a certain button 831, 832, 833, 834 of the keyboard, the display device 100 displays a menu or a graphic user interface corresponding to the recognized certain button 831, 832, 833, 834. If a user presses another button 831, 832, 833, 834, a menu corresponding to this button is further displayed. Also, a user may input specific information by pressing the certain buttons 831, 832, 833 and 834 of the keyboard. Further, the display device 100 may display data stored in the recognized input device 150.

On the other hand, even though the input device 150 is put on the touch screen, if a user does not press the certain buttons 831, 832, 833 and 834 of the keyboard, the display device 100 cannot recognize the input device 150. Thus, a user may employ the input device 150 not for the input device but for the keyboard's own function.

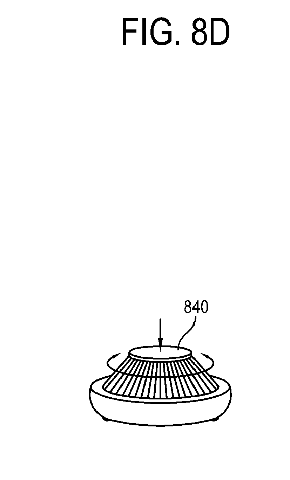

FIG. 8D shows that the input device is provided in the form of a push knob. The push knob 840 is pushed or pulled, and rotatable clockwise or counterclockwise with respect to a center axis.

A user pushes the push knob 840 of the input device 150 put on the touch screen, and turns the pushed push-knob 840 clockwise or counterclockwise to thereby select a desired menu. Also, a user may turn the push knob 840 to decrease or increase an audio volume or to enlarge or reduce a displayed image. Further, the display device 100 may display data stored in the recognized input device 150.

On the other hand, if a user does not push the push knob 840, he/she may employ the input device 150 not for the input device but for the push knob 840's own function.

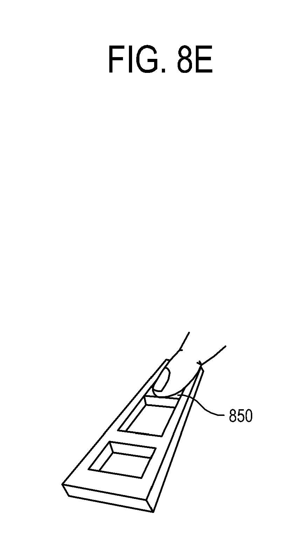

FIG. 8E shows that the input device is provided in the form of a slider. The slider 850 is movable on a certain axis.

A user presses the slider 850 of the input device 150 put on the touch screen, and moves the pressed slider 850 left and right or up and down to thereby select a desired menu. Also, a user may move the slider 850 to change a position of a displayed image or to enlarge or reduce a displayed image. Further, the display device 100 may display data stored in the recognized input device 150.

On the other hand, if a user does not press the slider 850, he/she may employ the input device 150 not for the input device but for the slider 850's own function.

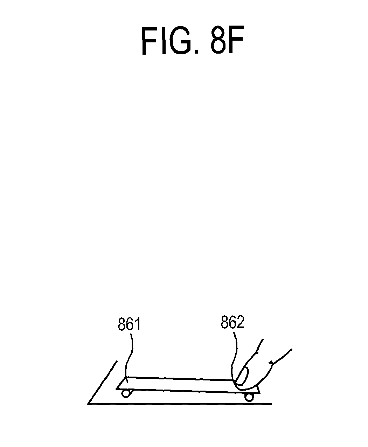

FIG. 8F shows that the input device is provided in the form of a keypad.

In the state that the input device 150 is put on the touch screen, if a user presses a certain position of the keypad (e.g., position 862), the display device 100 displays a menu or a graphic user interface corresponding to the certain position of the recognized input device. If a user presses another position (e.g., position 861), a menu corresponding to the other position is additionally displayed.

On the other hand, even though the input device 150 is put on the touch screen, if a user does not press the certain positions of the keypad, the display device 100 cannot recognize the input device 150. Thus, a user may employ the input device 150 not for the input device but for the keypad's own function.

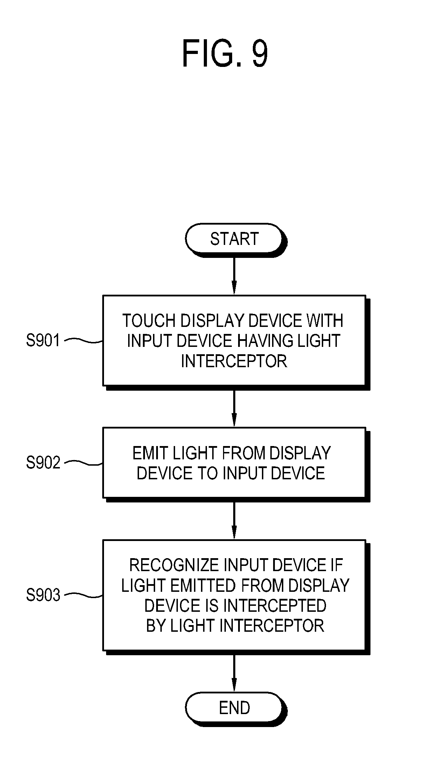

FIG. 9 is a flowchart of controlling a display system according to an exemplary embodiment of the present invention.

At operation S901, the input device 150 having the light interceptor 152 comes into contact with the display device 100. At operation S902, the display device 100 emits light to the input device 150.

Meanwhile, if a user wants to make the display device 100 recognize the input device 150, he/she moves down the light interceptor 152 mounted to a top part of the light transmitter 154 of the input device 150 toward the bottom part where the light transmitter 154 is placed.

In this case, the light emitted from the display device 100 and passing through the light transmitter 154 is intercepted by or reflected from the light interceptor 152 moving down toward the bottom part.

At operation S903, the display device 100 recognizes the input device 150 when the light emitted by the display device 100 is intercepted by the light interceptor 152.

As described above, according to an exemplary embodiment of the present invention, an object can be recognized at a point of time when a user actually wants to use the object separately from a point of time when the object is put on the touch screen, and it is thus deliberately possible to recognize or not to recognize the object when the object is put on the touch screen. Accordingly, before taking an action to use the object, a user can accomplish a touch input with a hand or other pointing devices while the object is put on the touch screen.

Also, the present disclosure proposes an object having a spatial structure to provide a three-dimensional tangible user interface, in which the object is recognized corresponding to various operating conditions, so that the object can be flexibly designed.

Further, the present disclosure proposes a method of recognizing the object, which can be applied to any touch screen capable of recognizing the object by FTIR, DI, and side looker, etc., thereby being flexibly adapted to an expanded touch-recognizing fashion.

Although a few exemplary embodiments of the present invention have been shown and described, it will be appreciated by those skilled in the art that changes may be made in these exemplary embodiments without departing from the principles of the invention, the scope of which is defined in the appended claims.

## Claims

1. A display system comprising:
an input device which selectively intercepts light;
a display panel;
an emitter which emits light;
a receiver which receives light; and
a display device comprising a controller which controls the emitter and the receiver to emit and receive light, respectively, and recognizes the input device if the input device touches the display device and light emitted from the emitter is intercepted by the input device.

2. The display system according to claim 1, wherein the input device comprises:
a light transmitter which transmits light; and
a movable light interceptor which intercepts light and is disposed perpendicularly to the light transmitter,
wherein the movable light interceptor is movable between a light intercepting position and a light transmitting position.

3. The display system according to claim 2, wherein the controller recognizes the input device by detecting a light interception position if light emitted from the emitter is intercepted by the light interceptor set in the light intercepting position.

4. The display system according to claim 3, wherein the controller detects the light interception position on the basis of a projected image of the display panel.

5. The display system according to claim 4, wherein the controller controls the emitter to emit light towards the display panel.

6. The display system according to claim 5, wherein the light is emitted towards the display panel at a lateral of the display panel.

7. The display system according to claim 5, wherein the light is emitted towards the display panel at an underside of the display panel.

8. The display system according to claim 4, wherein the controller recognizes a first certain pattern attached to a bottom part of the light interceptor and displayed on the projected image.

9. The display system according to claim 1, wherein the input device comprises:
a plurality of movable light interceptors which intercepts light and are disposed perpendicularly to the light transmitter,
wherein the plurality of movable light interceptors is movable between a light intercepting position and a light transmitting position, and
wherein the controller recognizes a second certain pattern comprising the plurality of the light interceptors.

10. The display system according to claim 3, wherein the controller detects coordinates corresponding to the light interception position by controlling the emitter to emit light at a lateral of the display panel and the receiver to receive the light emitted from the emitter.

11. The display system according to claim 1, wherein the emitter emits infrared light.

12. A method of controlling a display system, comprising
touching a display device with an input device which selectively intercepts light;
emitting light from the display device to the input device; and
recognizing the input device if light emitted from the display device is intercepted by the input device.

13. The method according to claim 12, wherein the input device comprises:
a light transmitter which transmits light; and
a movable light interceptor which intercepts light and is disposed perpendicularly to the light transmitter,
wherein the movable light interceptor is movable between a light intercepting position and a light transmitting position.

14. The method according to claim 13, further comprising detecting a light interception position to recognize the input device if light emitted from the display device is intercepted by the light interceptor set in the light intercepting position.

15. The method according to claim 14, further comprising using a projected image of a display panel to detect the light interception position.
